# EUROPÄISCHE PATENTSCHRIFT

(11) **EP 3 584 600 B1**
(45) Veröffentlichungstag und Bekanntmachung des Hinweises auf die Patenterteilung: **23.04.2025**
(21) Anmeldenummer: 19179320.7
(22) Anmeldetag: 11.06.2019
(51) Int. Cl.: G01S 7/00, G01S 13/04, G01S 13/87, G01S 13/933, G01S 13/02

(54) **KOORDINIERTES DURCHSUCHEN EINES LUFTRAUMS**
COORDINATED SEARCHING OF AIRSPACE
RECHERCHE COORDONNÉE D'UN ESPACE AÉRIEN

(30) Priorität: 13.06.2018 DE 102018114109
(43) Veröffentlichungstag der Anmeldung: 25.12.2019
(73) Patentinhaber: Airbus Defence and Space GmbH, 82024 Taufkirchen (DE)
(72) Erfinder: Katsilieris, Fotios, 82024 Taufkirchen (DE); Krach, Bernhard, 82024 Taufkirchen (DE)
(74) Vertreter: LKGLOBAL Lorenz & Kopf Patentanwalt Attorney at Law PartG mbB

(56) Entgegenhaltungen:
- US-A1- 2006 114 324

## Beschreibung

### GEBIET DER ERFINDUNG

Die vorliegende Erfindung befasst sich mit einem Verfahren zum Durchsuchen eines Suchbereichs, einem Flugkörper und einer Flugkörperformation.

### HINTERGRUND DER ERFINDUNG

Moderne Flugzeuge sind meist mit einer großen Anzahl an Sensoren ausgestattet, welche eine wichtige Rolle für das Flugzeug und/oder für den Piloten haben, um eine Mission mit bestmöglichem Ergebnis auszuführen.

Ein solcher Sensor ist beispielsweise ein Radar, welcher auch einer der meistverwendete Sensoren zur Lagebilderkennung ist. Mit einem Radar können Objekte oder Ziele bei großen Reichweiten erkannt oder detektiert werden. Die Eigenschaften eines Radars werden vom Wetter weniger beeinträchtigt, wie beispielsweise ein Kamerasensor. Ziel-Erkennung/Verfolgung mittels Radar ist beispielsweise auch dann noch möglich, wenn dies aufgrund von IMC (Instrument Metereological Conditions, deutsch Instrumentenflugbedingungen) mit bildgebenden elektro-optischen bzw. Infrarotsensoren nicht mehr möglich ist.

Flugzeuge wurden oft mit mechanisch schwenkenden Radarantennen ausgestattet. Dies hatte zur Folge, dass das Durchsuchen eines Luftraums mit ein paar Parametern ausgeführt werden konnte, die optimierbar waren. Üblicherweise definiert der Pilot den Luftraum, der durchsucht werden soll, meist als Winkelangabe und Halbbreite, und die Reichweite innerhalb derer ein Ziel definierter Größe erkannt werden soll. Aufgrund dieser Informationen optimiert das Radar die dann ausgesandte Wellenform. Bei einer solchen Vorgehensweise ist das Suchmuster und das Abtasten des Luftraums weitestgehend festgelegt und hängt nur von der Größe des Luftraums ab, der durchsucht wird.

Die US 2006 / 0 114 324 A1 beschreibt ein Überwachungsverfahren mit den folgenden Schritten: Senden von Informationsanforderungen an eine oder mehrere einer Vielzahl von unbemannten Flugplattformen, von denen jede einen oder mehrere Sensoren zum Sammeln von Informationen trägt; Koordinieren der Verarbeitung der Anforderungen unter der Vielzahl von Flugplattformen; und Übertragen von Antworten auf die Anforderungen an einen oder mehrere Anforderer. Es wird ferner ein Überwachungssystem beschrieben, das zur Durchführung des Verfahrens verwendet werden kann.

### ZUSAMMENFASSUNG DER ERFINDUNG

Eine Aufgabe der vorliegenden Erfindung besteht nun darin, das Durchsuchen eines Luftraums so zu verbessern, dass eine schnelle und effiziente Lagebilderkennung, beispielsweise für einen Piloten, gewährleistet werden kann.

Diese Aufgabe wird durch ein Verfahren, einem Flugkörper und einer Flugkörperformation nach einem der unabhängigen Ansprüche gelöst. Es sei darauf hingewiesen, dass die folgenden beschriebenen Aspekte für das Verfahren, für den Flugkörper als auch für die Flugkörperformation zutreffen.

Gemäß der Erfindung ist ein Verfahren zum Durchsuchen eines Suchbereichs angegeben, wobei jeweils wenigstens ein Radar in wenigstens zwei Flugkörpern angeordnet ist. Das Verfahren umfasst: a) Aufteilen des Suchbereichs in wenigstens zwei Teilsuchbereiche, b) Durchsuchen der wenigstens zwei Teilsuchbereiche vom jeweiligen Radar der wenigstens zwei Flugkörper, wobei die wenigstens zwei Flugkörper das Durchsuchen kooperativ ausführen, wobei die Teilsuchbereiche so gewählt sind, dass eine Gesamtsuchzeit minimal ist.

Ein Radar ist dazu eingerichtet verschiedene Objekte zu detektieren. Insbesondere kann das Radar das Durchsuchen eines Suchbereichs, welcher meist ein (Luft)Volumen ist, durchführen. Gemäß der Erfindung wird ein Suchbereich so durchsucht werden, dass Objekte oder Ziele mit einer vorgegebenen, auswählbaren oder einstellbaren Detektionswahrscheinlichkeit detektiert werden können. Mit anderen Worten, die Wahrscheinlichkeit, dass sich nach dem Durchsuchen des Suchbereichs undetektierte Ziele oder Objekte in diesem befinden, ist sehr gering; es bleiben möglichst wenige oder keine Ziele oder Objekte undetektiert. Das Durchsuchen ist von höchster Bedeutung beispielsweise für die Lagebilderkennung durch einen Piloten. Undetektierte Objekte oder Ziele können nicht nur ein Problem werden wegen einer potentiellen Feindseligkeit während einer Mission, sondern auch wegen einer möglichen Kollisionsgefahr im Luftraum. Lagebilderkennung bezeichnet die Bestimmung des Ortes bzw. der Geschwindigkeit von anderen Zielen oder Objekten.

Radarsensoren, in diesem Text auch kurz Radar genannt, sind Sensoren welche der Flugkörper ggf. nebst weiteren Sensoren wie einer Kamera etc. aufweist. Ein solches Radar, kann mit aktiver elektronischer Ansteuerung der Einzelelemente des Radars ausgestattet sein (in Englisch: active electronically scanned array antennas (AESA)). Ein solches Radar kann den Radarstrahl nahezu instantan für verschiedene Raumwinkel steuern (ein Raumwinkel wird als Horizontal- und Vertikalwinkel angegeben, auch Azimut und Elevation genannt), so dass adaptives Strahlausrichten möglich ist.

Ein Flugkörper umfasst jegliche Art von fliegendem Gerät mit jeglicher Art von Antrieb. Beispielsweise, Flugzeuge, unbemannte Flugzeuge, in Englisch UAV ("unmanned aerial vehicle"), Drohnen, Lenkflugkörper, Raketen oder Helikopter.

Der Suchaufwand ein Objekt oder Ziel im Suchbereich von zwei oder mehreren Flugkörpern zu detektieren, wird kooperativ durchgeführt. Das heißt, dass ein koordiniertes Durchsuchen des Suchbereichs stattfindet.

Der Suchbereich ist ein (Luft)Volumen das vom wenigstens einem Radar des jeweiligen Flugkörpers erfasst werden kann. Der Suchbereich kann anhand von Horizontal-, Vertikalwinkel angegeben werden. Es ist auch möglich den Suchbereich anhand von dreidimensionalen Koordinaten anzugeben.

Oft befinden sich die Flugkörper in einer Flugformation im durchflogenen Luftraum. Der Suchbereich wird sich beispielsweise in der Umgebung von beiden Flugkörpern befinden. Bevorzugt wird sich der Suchbereich in Flugrichtung gesehen vor den Flugkörpern befinden.

Der zu durchsuchende Bereich im Luftraum, also der Suchbereich für die Flugkörper, wird in wenigstens zwei Teilsuchbereiche aufgeteilt. Die Anzahl der Teilsuchbereiche entspricht in manchen Beispielen der Erfindung der Anzahl der Flugkörper. Das Durchsuchen der wenigstens zwei Teilsuchbereiche erfolgt vom jeweiligen Radar des Flugkörpers, wobei jeweils ein Flugkörper wenigstens einen Teilsuchbereich durchsucht.

Das Durchsuchen der Teilsuchbereiche bzw. des Suchbereichs ist ein kooperatives Durchsuchen. Der Suchaufwand wird so verteilt, dass gleiche Bereiche des Suchbereichs nicht öfter durchsucht werden müssen. Bei zwei Flugkörpern mit jeweils einem Radar wird der Suchbereich beispielsweise in zwei Teilsuchbereiche aufgeteilt. Beide Flugkörper untersuchen zeitgleich oder im Wesentlichen zeitgleich ihren jeweiligen Teilsuchbereich. Das Verfahren wird, in manchen Beispielen, von sich in der Luft befindenden wenigstens zwei Flugkörpern durchgeführt.

Die Teilsuchbereiche sind so gewählt, das eine Gesamtsuchzeit minimal ist. Damit ist gewährleistet, dass die beste Aufteilung des Suchbereichs gefunden wird und dass ein mehrfaches Durchsuchen des gleichen Bereichs entfällt. Der Suchbereich wird in der schnellstmöglichen Zeit durchsucht, sodass eine Zeitersparnis für das Durchsuchen eines dreidimensionalen Luftvolumens, das auch vom Piloten vorgegeben sein kann, erreicht wird. Mit dem erfindungsgemäßen Verfahren können Verzögerungen beim Durchsuchen eines Suchbereichs vermieden werden, welche beispielsweise auftreten, wenn der Suchbereich in einer naiven Weise, beispielsweise zu gleichen Teilen, aufgeteilt wird. Dies gilt insbesondere, wenn sich der Suchbereich bei beliebigen Horizontal- und Vertikalwinkeln im Luftraum erstreckt. In manchen Beispielen des Verfahrens ist die Gesamtsuchzeit die kooperative Gesamtsuchzeit, die von den wenigstens zwei Flugkörpern benötigt wird um den Suchbereich zu durchsuchen.

Gemäß einem Beispiel ist die Gesamtsuchzeit das Maximum aus den Suchzeiten für die entsprechenden Teilsuchbereiche. Beispielsweise können die Suchzeiten für verschiedene Aufteilungen des Suchbereichs in Teilsuchbereiche gemessen werden und so das Maximum der Suchzeiten bestimmt werden. Für eine bestimmte Aufteilung des Suchbereichs in Teilsuchbereiche ist die Gesamtsuchzeit minimal. Die Suchzeit ist die Zeit, die der Radarstrahl benötigt um den Teilsuchbereich auszuleuchten und das Echo zu empfangen. In manchen Beispielen wird auch die Zeit mitberücksichtigt werden, welche benötigt wird um das empfangene Signal (Echo) zu bearbeiten um Objekte oder Ziele zu entdecken.

Gemäß einem Beispiel ist die Wahrscheinlichkeit einer Detektion eines Objekts im Suchbereich vorgebbar oder vordefiniert. Beispielsweise kann der Pilot die Wahrscheinlichkeit einer Detektion vorgeben. Gegebenenfalls kann die Wahrscheinlichkeit geändert oder an die jeweilige Lagebilderkennung angepasst werden.

Gemäß einem Beispiel weisen die Teilsuchbereiche im Wesentlichen keinen Überlapp auf. In manchen Beispielen weisen die Teilsuchbereiche keinen Überlapp auf. Damit wird die Koordinierung des Durchsuchens einfacher und der Kommunikationsbedarf zwischen den Flugkörpern ist niedrig. Es gibt Beispiele, in denen die Teilsuchbereiche minimal überlappen. Durch einen minimalen oder überhaupt keinen Überlapp wird mehrmaliges Durchsuchen eines (Teil)Bereichs vermieden und der Suchaufwand zum Durchsuchen eines Suchbereichs kann geringgehalten werden. Auch werden Lücken im Suchbereich vermieden bei gleichzeitig minimaler Gesamtsuchzeit.

Gemäß einem Beispiel ist der Suchbereich vorgebbar oder veränderbar. Beispielsweise kann der Pilot den Suchbereich vorgeben durch einstellen eines Horizontal- bzw. Vertikalwinkels und der dazugehörigen (Halb)Breite (auch als (Halb)Breite in Azimut und Elevation bezeichnet). Gegebenenfalls kann der Suchbereich an die jeweilige Lagebilderkennung angepasst werden. In manchen Beispielen ist der Suchbereich vordefiniert.

Gemäß einem Beispiel ändert sich das Aufteilen des Suchbereichs in Teilsuchbereiche entsprechend der Bewegung und/oder der Trajektorie der wenigstens zwei Flugkörper.

Erfindungsgemäß wird das Aufteilen des Suchbereichs in Teilsuchbereiche entsprechend der Bewegung und/oder der Trajektorie der wenigstens zwei Flugkörper fortlaufend angepasst. Der Suchbereich ist beispielsweise mittels dreidimensionalen Koordinaten vorgegeben. Die Flugkörper bewegen sich im Suchbereich, so dass sich der Horizontal- und Vertikalwinkel (Azimut- und Elevationswinkel) und deren Winkelbreiten ändern.

Gemäß einem Beispiel ist eine minimale Wahrscheinlichkeit einer Detektion eines Objekts von vorgegebener Größe bei vorgegebener Entfernung gewährleistet. Dies dient der situativen Aufmerksamkeit, so dass beispielsweise für den Piloten angegeben werden kann, wie gut der Suchbereich durchsucht wurde.

Gemäß einem Beispiel wird ein Teilsuchbereich gemäß eines Horizontalwinkels, eines Vertikalwinkels und dazugehörigen Winkelbreiten, oder gemäß dreidimensionaler Koordinaten bestimmt. Auch können alle Teilsuchereiche anhand von Horizontalwinkel, Vertikalwinkel bestimmt werden. In manchen Beispielen ist die Bestimmung des einen oder der mehreren Teilsuchbereiche mittels dreidimensionalen Koordinaten möglich, beispielsweise werden die Eckpunkte oder die Flächen des Teilsuchbereichs angegeben.

Gemäß einem Beispiel weist einer der wenigstens zwei Flugkörper den zu durchsuchenden Teilsuchbereich dem wenigstens einen anderen Flugkörper zu. Damit kann eine zentrale Steuerung des Verfahrens geschaffen werden (zentralisiertes Verfahren). Die Zuweisung kann von jedem der Flugkörper ausgeführt werden. In manchen Beispielen ist einer der Flugkörper dazu ausgewiesen. Durch eine zentrale Steuerung kann der Suchaufwand optimiert werden.

Gemäß einem Beispiel legen die wenigstens zwei Flugkörper unabhängig voneinander jeweils den Teilsuchbereich fest, der vom Radar des Flugkörpers durchsucht werden soll. Durch das unabhängige Zuweisen des zu durchsuchenden Bereichs durch den jeweiligen Flugkörper wird eine dezentrale Steuerung geschaffen (dezentralisiertes Verfahren). Der zu durchsuchende Bereich, den der einzelne Flugkörper sich selber zuweist kann mit dem Teilbereich identisch sein, wenn der Suchbereich von einem Flugkörper anhand einer zentralen Steuerung in verschiedene Teilsuchbereiche ausgeführt wird.

Gemäß einem Aspekt der Erfindung ist ein Flugkörper vorgesehen, der wenigstens ein Radar und eine Prozesseinheit umfasst. Die Prozesseinheit ist dazu eingerichtet, das erfindungsgemäße Verfahren durchzuführen.

Gemäß einem Aspekt der Erfindung ist eine Flugkörperformation vorgesehen, welche wenigstens zwei Flugkörper umfasst, wobei die Flugkörperformation dazu eingerichtet ist, einen Suchbereich in einem Luftraum zu erfassen.

Gemäß einem Aspekt der Erfindung ist das koordinierte Durchsuchen eines Suchbereichs mit wenigstens zwei Flugkörpern, in welchen jeweils wenigstens ein Radar angeordnet ist, von großem Nutzen. Insbesondere ergibt sich durch das Verfahren eine Zeitersparnis beim Durchsuchen eines 3-dimensionalen Suchbereichs. Wenn der Suchbereich bei beliebig vorgegebenen Azimut- und Elevationswinkeln (Horizontal- und Vertikalwinkel) und den dazugehörigen Winkelbreiten liegt, dann führt eine einfache Aufteilung des Suchbereichs wie im Stand der Technik, beispielsweise ein Halbieren des Suchbereichs, zu signifikanten Zeitverzögerungen in der Gesamtsuchzeit. Derartige Zeitverzögerungen sind beim erfindungsgemäßen Verfahren nahezu ausgeschlossen. Die Teilsuchbereiche überlappen nicht (minimale Überlappung der Teilsuchbereiche, beispielsweise eine gemeinsame Grenze der Teilsuchbereiche können in manchen Beispielen vorhanden sein). Das Verfahren teilt den Suchbereich in die bestmöglichen Teilbereiche auf, so dass die Gesamtsuchzeit, welche zum kooperativen Durchsuchen des Suchbereichs benötigt wird, um eine gewünschte Detektionswahrscheinlichkeit zu gewährleisten, minimal ist. Mit anderen Worten, die Zeit die benötigt wird um einen Suchbereich zu durchsuchen, wird minimiert, wobei eine minimale Detektionswahrscheinlichkeit für Ziele oder Objekte vorbestimmter Größe bei einer vorbestimmten Entfernung gewährleistet wird. Eine Zeitersparnis zum Durchsuchen eines dreidimensionalen Volumens, welches vom Piloten vorgegeben werden kann, ist das Ergebnis. Dies führt insbesondere bei einem beliebig vorgegebenen Suchbereich, zu einem effektiveren und vor allem deutlich schnelleren Durchsuchen.

Es sei darauf hingewiesen, dass die Merkmale der Ausführungsbeispiele des Verfahrens auch für Ausführungsformen des Flugkörpers sowie der Flugkörperformation gelten und umgekehrt. Außerdem können auch diejenigen Merkmale frei miteinander kombiniert werden, bei denen dies nicht explizit erwähnt ist.

Diese und weitere Aspekte der Erfindung werden unter Bezugnahme und mit Verweis auf die folgenden Ausführungen ersichtlich.

### KURZE BESCHREIBUNG DER ZEICHNUNGEN

Nachfolgend wird anhand der beigefügten Zeichnungen näher auf Ausführungsbeispiele der Erfindung eingegangen. Es zeigen:
- Fig. 1: zeigt skizzenhaft zwei Flugkörper und einen Suchbereich;
- Fig. 2.: zeigt beispielhaft einen zu durchsuchenden Suchbereich in einem Koordinatensystem;
- Fig. 3: zeigt beispielhaft einen zu durchsuchenden Suchbereich in einem Koordinatensystem;
- Fig. 4: zeigt die Aufteilung des Suchbereichs S1 aus Figur 2 in jeweils zwei Teilsuchbereiche TS1, TS2;
- Fig. 5: zeigt die Aufteilung des Suchbereichs S2 aus Figuren 3 in jeweils zwei Teilsuchbereiche TS1, TS2;
- Fig. 6: zeigt ein Beispiel nach dem Stand der Technik.

### DETAILLIERTE BESCHREIBUNG VON AUSFÜHRUNGSFORMEN

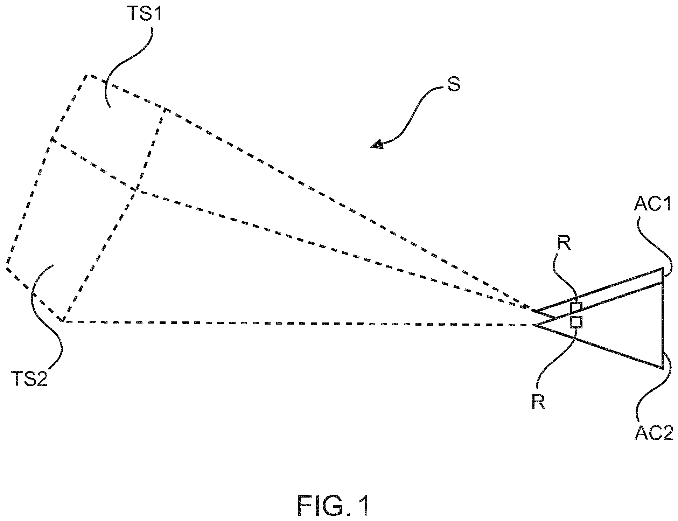

Figur 1 zeigt skizzenhaft zwei Flugkörper AC1, AC2 und einen Suchbereich S. Beide Flugkörper AC1, AC2 befinden sich in der Luft. Jeder Flugkörper AC1, AC2 weist ein Radar R auf. Der Suchbereich S ist ein dreidimensionaler Bereich der sich in der Umgebung der Flugkörper AC1, AC2 befindet. Die Flugkörper AC1, AC2 fliegen in manchen Ausführungsbeispielen als Flugformation.

Der Suchbereich S teilt sich auf in zwei Teilsuchbereiche TS1, TS2 die vom Radar R des jeweiligen Flugkörpers AC1, AC2 durchsucht werden. Die Teilsuchbereiche TS1, TS2 haben keinen Überlapp. Das Durchsuchen der Teilbereiche TS1, TS2 wird kooperativ ausgeführt. Wie in den folgenden Figuren beschrieben, umfassen die Teilsuchbereiche TS1, TS2 den gesamten Suchbereich S.

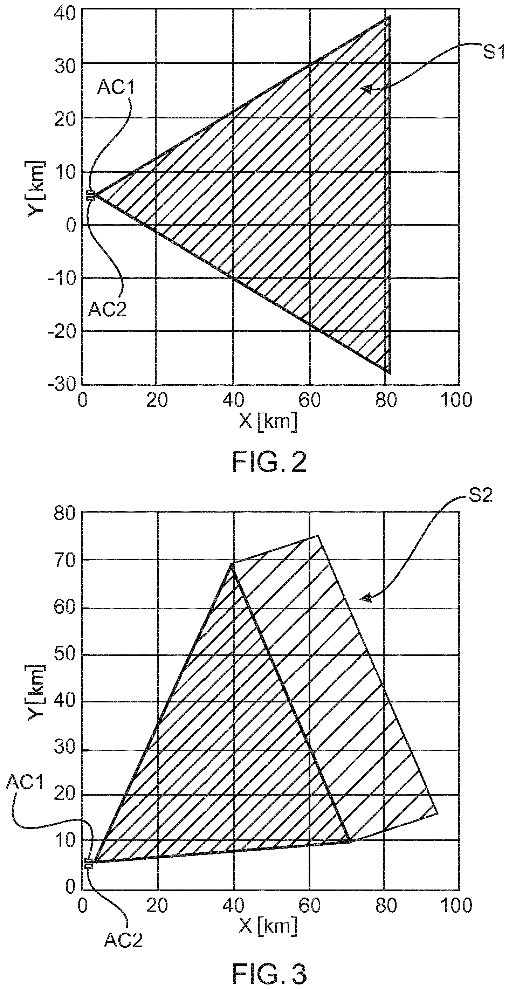

Figuren 2 und 3 zeigen jeweils einen Suchbereich S1 oder S2. Die Flugkörper AC1, AC2 fliegen in einer Höhe von 10 km und sind auf der gezeigten Y-Achse 500 m voneinander entfernt. Aus Gründen der Darstellbarkeit sind die Flugkörper AC1, AC2 kaum voneinander zu unterscheiden. Die numerischen Angaben sind beispielhaft. Im Folgenden wird der Suchbereich bzw. die Teilsuchbereiche mittels Azimutwinkel θ (Horizontalwinkel) und Elevationswinkel φ (Vertikalwinkel) und Winkelhalbbreite θ-S1, θ-S2 für den Azimutwinkel und φ-S1, φ-S2 für den Elevationswinkel angegeben.

In Figur 2, soll der Suchbereich S1 vom jeweiligen Radar R der Flugkörper AC1, AC2 durchsucht werden, welcher zentriert ist bei Azimutwinkel θ = 0° und Elevationswinkel φ = 0°, also direkt vor den Flugkörpern AC1, AC2, mit einer Winkelbreite θ-S1 von -25° bis 25° für den Azimutwinkel und φ-S1 von - 25° bis 25° für den Elevationswinkel. Ein solcher Suchbereich ist üblich zur Vermeidung von Kollisionen mit anderen Flugkörpern.

In Figur 3, soll der Suchbereich S2 vom jeweiligen Radar R der Flugkörper AC1, AC2 durchsucht werden, welcher zentriert ist bei Azimutwinkel θ = 30° und Elevationswinkel φ = 20°, mit einer Winkelbreite θ-S1 von 5° bis 55° für den Azimutwinkel und φ-S1 von - 5° bis 45° für den Elevationswinkel. Ein solcher Suchbereich stellt eine Situation dar, in der die Piloten informiert wurden, dass sich möglicherweise bedrohliche Ziele oder Objekte nähern. Bei unbemannten Flugkörpern erhält ein entsprechendes Gerät oder System der Flugkörper die Information. In anderen Ausführungsformen ist es möglich, dass eine Bodenstation die Information erhält.

In beiden Figuren 2 und 3 soll der Suchbereich S1, S2 schnellstens durchsucht werden, bei gegebenem Radarquerschnitt σ (in Englisch: radar cross section) und Reichweite, wobei eine bestimmte Detektionswahrscheinlichkeit PD vorgegeben ist. Gemäß dem Verfahren wird der Suchbereich S1 oder S2 in zwei Teilsuchbereiche aufgeteilt, die vom jeweiligen Radar R der zwei Flugkörper AC1, AC2 kooperativ durchsucht werden. Die Teilsuchbereiche weisen dabei keinen Überlapp auf.

Es soll also eine Aufteilung des Suchbereichs S1, S2 gefunden werden, so dass eine Gesamtsuchzeit zum Durchsuchen des Suchbereichs S1, S2 minimal ist. Dabei soll einen Detektionswahrscheinlichkeit PD erfüllt sein. In manchen Ausführungsbeispielen ist eine minimale Detektionswahrscheinlichkeit für das Detektieren eines Zieles oder Objektes von vorgegebener Größe und Entfernung gewährleistet.

Das Verfahren der Aufteilung des Suchbereichs S1 oder S2 wird für verschiedene Kombinationen von jeweils zwei Teilsuchbereichen TS1, TS2 durchlaufen und die Gesamtsuchzeit zum Durchsuchen des Suchbereichs S1 oder S2 wird ermittelt. Um die beste Aufteilung des Suchbereichs S1, S2 zu erhalten wird in diesem Beispiel jeweils der Azimutwinkelbereich oder der Elevationswinkelbereich verändert. Jeder Flugkörper AC1, AC2 durchsucht den gesamten Elevationsbereich aber nur einen Teil des Azimutbereichs, oder den gesamten Azimutbereich aber nur einen Teil des Elevationsbereichs. In anderen Beispielen kann auch eine andere Kombination der Aufteilung zugrunde gelegt werden.

Für jede Kombination wird die Radarbeleuchtungszeit pro Radarstrahl ermittelt. Dann werden alle Radarbeleuchtungszeiten pro Flugkörper AC1, AC2 summiert. Die Gesamtsuchzeit für einen Suchbereich S1, S2 berechnet sich als das Maximum aus den Suchzeiten für die entsprechenden Teilsuchbereiche TS1, TS2.

Die Kombination der zwei Teilsuchbereiche TS1, TS2 mit der niedrigsten Gesamtsuchzeit wird für das dann folgende Durchsuchen des Suchbereichs S1 oder S2 verwendet. In diesem Beispiel führt die gefundene geometrische Aufteilung gemäß eines Horizontalwinkels, Vertikalwinkels und einer Entfernung, die Detektionswahrscheinlichkeit PD für ein Objekt oder Ziel, als auch die minimale Gesamtsuchzeit zu einem schnellen Durchsuchen des Suchbereichs S1 oder S2 und damit zu einer schnellen Lagebilderkennung. Beispielsweise kann eine drohende Kollisionsgefahr vermieden werden.

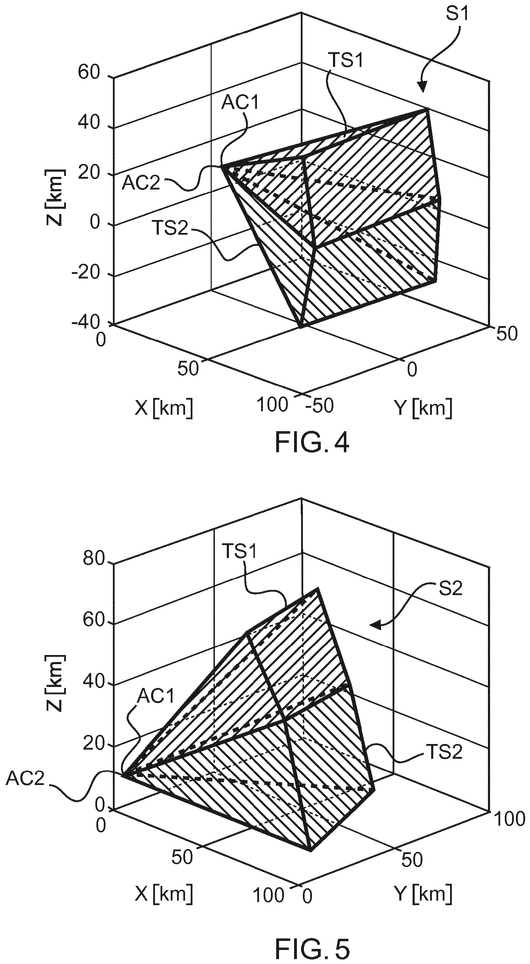

Figur 4 und 5 zeigen die Aufteilung des Suchbereichs S1, S2 aus den Figuren 2, 3 in jeweils die zwei Teilsuchbereiche TS1, TS2. Jeder Teilsuchbereich TS1, TS2 ist einem der Flugkörper AC1, AC2 zugeordnet und wird vom Radar R des jeweiligen Flugkörpers AC1, AC2 durchsucht.

In Figur 4 ist eine symmetrische Aufteilung in die Teilsuchbereiche TS1, TS2 zu sehen. Eine solche Aufteilung ist intuitiv und einfach. Das Aufteilungsverhältnis bezüglich der Elevation ist 25°/25° für die Teilsuchbereiche TS1, TS2. Der Suchbereich S1 ist wie in Figur 2 beschrieben.

In Figur 5 ist eine Aufteilung in die Teilsuchbereiche TS1, TS2 zu sehen. Das Aufteilungsverhältnis bezüglich der Elevation ist 27,8°/22,2° für die Teilsuchbereiche TS1, TS2. Der Suchbereich S2 ist wie in Figur 3 beschrieben.

Die Figuren zeigen, wenn ein Suchbereich symmetrisch um die Antennennormale des Radarsensors (vgl. Fig. 2) liegt, führt eine symmetrische Aufteilung der Teilsuchbereiche TS1, TS2 zu einer minimalen Gesamtsuchzeit. Ist hingegen der Suchbereich nicht symmetrisch dann führt eine symmetrische Aufteilung zu einer längeren Gesamtsuchzeit, so dass mit signifikanten Zeitverzögerungen beim Durchsuchen des Suchbereichs zu rechnen ist.

Die Zeit zum Durchlaufen des Verfahrens, um die beste Aufteilung für den jeweiligen Suchbereich zu finden ist deutlich schneller als das Durchsuchen des Suchbereichs, so dass dies die Gesamtsuchzeit kaum beeinflusst.

In einem weiteren Beispiel ändert sich das Aufteilen des Suchbereichs S1, S2 in die zwei Teilsuchbereiche TS1, TS2 mit der Bewegung bzw. der Trajektorie der Flugkörper. In manchen Beispielen wird die Aufteilung in die Teilsuchbereiche TS1, TS2 fortlaufend angepasst.

In manchen Ausführungsformen wird das Verfahren in einer entsprechenden Vorrichtung beispielsweise des Flugkörper AC1 durchgeführt. Dazu ist nur die Position des anderen Flugkörpers AC2 (vgl. auch Figur 1) nötig. Dieser weist dann den zu durchsuchenden Teilsuchbereich TS2 dem anderen Flugkörper AC2 zu. Es werden beispielsweise nur folgende Werte an den anderen Flugkörper AC2 übertragen: Azimut- und Elevation-Mittellinie und die Halbbreite des Teilsuchbereichs TS2 der dem anderen Flugkörper AC2 zugewiesen wird. Damit ist eine zentrale Steuerung des Verfahrens geschaffen.

Es ist jedoch auch möglich, dass die Flugkörper AC1, AC2 unabhängig voneinander jeweils den Teilsuchbereich TS1, TS2 festlegen, der vom Radar R des Flugkörpers AC1, AC2 durchsucht werden soll. Durch das unabhängige Zuweisen des zu durchsuchenden Teilsuchbereichs TS1, TS2 durch den jeweiligen Flugkörper AC1, AC2 wird eine dezentrale Steuerung geschaffen.

Die beschriebenen Flugkörper AC1, AC2 sind zum Durchführen des Verfahrens und zum Durchsuchen des Suchbereichs entsprechend ausgestattet. Beispielsweise weist ein solcher Flugkörper auch eine Prozesseinheit zum Durchführen des Verfahrens auf.

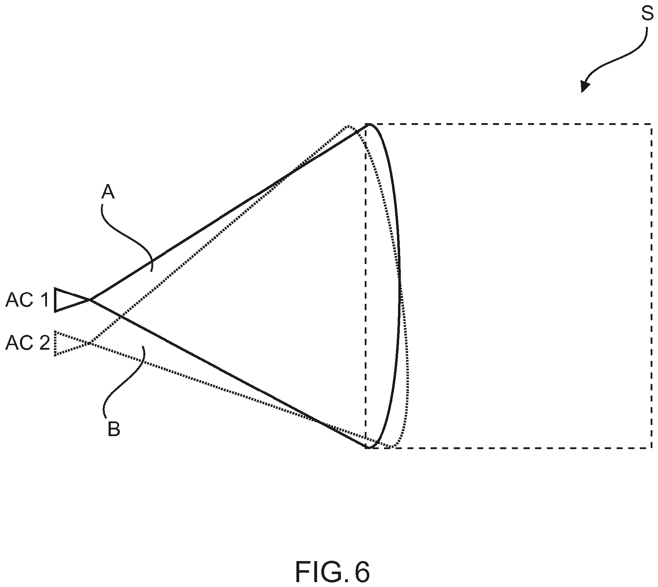

Figur 6 zeigt das Durchsuchen eines Bereichs S in einem Luftraum gemäß dem Stand der Technik. Die Suche wird nicht-kooperativ ausgeführt. Insbesondere werden die Bereiche A, B, die von dem jeweiligen Flugkörper AC1, AC2 durchsucht werden, so aufgeteilt, dass diese Bereiche A, B größtenteils überlappen, wie in Figur 6 gezeigt. Dies verlängert die Gesamtsuchzeit und führt zu Zeitverzögerungen bei der Lagebilderkennung.

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt. Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Durchsuchen eines Suchbereichs (S), wobei jeweils wenigstens ein Radar (R) in wenigstens zwei Flugkörpern (AC1, AC2) angeordnet ist, umfassend:
a) Aufteilen des Suchbereichs (S) in wenigstens zwei Teilsuchbereiche (TS1, TS2),
b) Durchsuchen der wenigstens zwei Teilsuchbereiche (TS1, TS2) vom jeweiligen Radar (R) der wenigstens zwei Flugkörper (AC1, AC2), wobei die wenigstens zwei Flugkörper (AC1, AC2) das Durchsuchen kooperativ ausführen,
wobei die Teilsuchbereiche (TS1, TS2) so gewählt sind, dass eine Gesamtsuchzeit minimal ist;
wobei das Aufteilen des Suchbereichs (S) in Teilsuchbereiche (TS1, TS2) entsprechend der Bewegung und/oder der Trajektorie der wenigstens zwei Flugkörper (AC1, AC2) fortlaufend angepasst wird;
**dadurch gekennzeichnet, dass** das Aufteilen des Suchbereichs (S) für verschiedene Kombinationen von jeweils zwei Teilsuchbereichen (TS1, TS2) durchlaufen wird und die Gesamtsuchzeit zum Durchsuchen des Suchbereichs (S) ermittelt wird;
und dass die Kombination der zwei Teilsuchbereiche (TS1, TS2) mit der niedrigsten Gesamtsuchzeit für das nachfolgende Durchsuchen des Suchbereichs (S) verwendet wird.

2. Verfahren nach Anspruch 1, wobei die Gesamtsuchzeit das Maximum aus den Suchzeiten für die entsprechenden Teilsuchbereiche (TS1, TS2) ist.

3. Verfahren nach einem der vorherigen Ansprüche, wobei die Wahrscheinlichkeit einer Detektion (PD) eines Objekts im Suchbereich (S) vorgebbar oder vordefiniert ist.

4. Verfahren nach einem der vorherigen Ansprüche, wobei die Teilsuchbereiche (TS1, TS2) im Wesentlichen keinen Überlapp aufweisen.

5. Verfahren nach einem der vorherigen Ansprüche, wobei der Suchbereich (S) vorgebbar oder veränderbar ist.

6. Verfahren nach einem der vorherigen Ansprüche, wobei eine minimale Wahrscheinlichkeit einer Detektion eines Objekts von vorgegebener Größe bei vorgegebener Entfernung gewährleistet ist.

7. Verfahren nach einem der vorherigen Ansprüche, wobei ein Teilsuchbereich (TS1, TS2) gemäß eines Horizontalwinkels, eines Vertikalwinkels und dazugehörigen Winkelbreiten, oder gemäß dreidimensionaler Koordinaten bestimmt wird.

8. Verfahren nach einem der vorherigen Ansprüche, wobei einer der wenigstens zwei Flugkörper (AC1, AC2) den zu durchsuchenden Teilsuchbereich (TS1, TS2) dem wenigstens einen anderen Flugkörper (AC1, AC2) zuweist.

9. Verfahren nach einem der vorherigen Ansprüche, wobei die wenigstens zwei Flugkörper (AC1, AC2) unabhängig voneinander jeweils den Teilsuchbereich (TS1, TS2) festlegen, der vom Radar (R) des Flugkörpers (AC1, AC2) durchsucht werden soll.

10. Flugkörper (AC1, AC2) für eine Flugkörperformation nach Anspruch 11, umfassend wenigstens ein Radar (R) und eine Prozesseinheit, wobei die Prozesseinheit dazu eingerichtet ist ein Verfahren nach einem der Ansprüche 1 - 9 durchzuführen.

11. Flugkörperformation umfassend wenigstens zwei Flugkörper (AC1, AC2) nach Anspruch 10, wobei die Flugkörperformation dazu eingerichtet ist, einen Suchbereich (S) in einem Luftraum zu erfassen.

## Claims

1. Method for searching a search area (S), wherein at least one radar (R) is arranged in each of at least two missiles (AC1, AC2), comprising:
a) splitting the search area (S) into at least two search subareas (TS1, TS2),
b) searching the at least two search subareas (TS1, TS2) by means of the respective radar (R) of the at least two missiles (AC1, AC2), wherein the at least two missiles (AC1, AC2) carry out the searching cooperatively,
wherein the search subareas (TS1, TS2) are chosen such that a total search time is minimal;
wherein the splitting of the search area (S) into search subareas (TS1, TS2) is continually adapted according to the movement and/or the trajectory of the at least two missiles (AC1, AC2);
**characterized in that**
the splitting of the search area (S) is performed for different combinations of in each case two search subareas (TS1, TS2), and the total search time for searching the search area (S) is ascertained;
and **in that** the combination of the two search subareas (TS1, TS2) having the shortest total search time is used for the subsequent searching of the search area (S).

2. Method according to Claim 1, wherein the total search time is the maximum from the search times for the applicable search subareas (TS1, TS2).

3. Method according to either of the preceding claims, wherein the probability of detection (PD) of an object in the search area (S) is prescribable or predefined.

4. Method according to one of the preceding claims, wherein the search subareas (TS1, TS2) have substantially no overlap.

5. Method according to one of the preceding claims, wherein the search area (S) is prescribable or alterable.

6. Method according to one of the preceding claims, wherein a minimal probability of detection of an object of prescribed size at a prescribed distance is ensured.

7. Method according to one of the preceding claims, wherein a search subarea (TS1, TS2) is determined based on a horizontal angle, a vertical angle and associated angle widths, or based on three-dimensional coordinates.

8. Method according to one of the preceding claims, wherein one of the at least two missiles (AC1, AC2) assigns the search subarea (TS1, TS2) to be searched to the at least one other missile (AC1, AC2).

9. Method according to one of the preceding claims, wherein the at least two missiles (AC1, AC2) each independently of one another stipulate the search subarea (TS1, TS2) that is supposed to be searched by the radar (R) of the missile (AC1, AC2).

10. Missile (AC1, AC2) for a missile formation according to Claim 11, comprising at least one radar (R) and a process unit, wherein the process unit is configured to perform a method according to one of Claims 1-9.

11. Missile formation comprising at least two missiles (AC1, AC2) according to Claim 10, wherein the missile formation is configured to cover a search area (S) in an airspace.

## Revendications

1. Procédé de recherche d'une zone de recherche (S), au moins un radar (R) étant disposé respectivement dans au moins deux engins volants (AC1, AC2), le procédé comprenant :
a) la division de la zone de recherche (S) en au moins deux sous-zones de recherche (TS1, TS2),
b) la recherche des au moins deux sous-zones de recherche (TS1, TS2) à l'aide du radar (R) respectif des au moins deux engins volants (AC1, AC2), les au moins deux engins volants (AC1, AC2) effectuant la recherche de manière coopérative,
les sous-zones de recherche (TS1, TS2) étant choisies de telle sorte qu'un temps de recherche total soit minimal ; la division de la zone de recherche (S) en sous-zones de recherche (TS1, TS2) étant adaptée en continu en fonction du mouvement et/ou de la trajectoire des au moins deux engins volants (AC1, AC2) ;
**caractérisé en ce que**
la division de la zone de recherche (S) est effectuée pour différentes combinaisons de deux sous-zones de recherche (TS1, TS2) respectivement, et le temps de recherche total pour la recherche de la zone de recherche (S) est déterminé ;
et **en ce que** la combinaison des deux sous-zones de recherche (TS1, TS2) présentant le temps de recherche total le plus court est utilisée pour la recherche ultérieure de la zone de recherche (S).

2. Procédé selon la revendication 1, dans lequel le temps de recherche total est le maximum parmi les temps de recherche pour les sous-zones de recherche (TS1, TS2) correspondantes.

3. Procédé selon l'une des revendications précédentes, dans lequel la probabilité d'une détection (PD) d'un objet dans la zone de recherche (S) peut être spécifiée ou est prédéfinie.

4. Procédé selon l'une des revendications précédentes, dans lequel les sous-zones de recherche (TS1, TS2) ne présentent sensiblement aucun chevauchement.

5. Procédé selon l'une des revendications précédentes, dans lequel la zone de recherche (S) peut être spécifiée ou peut être modifiée.

6. Procédé selon l'une des revendications précédentes, dans lequel une probabilité minimale d'une détection d'un objet de dimension spécifiée à une distance spécifiée est garantie.

7. Procédé selon l'une des revendications précédentes, dans lequel une sous-zone de recherche (TS1, TS2) est déterminée suivant un angle horizontal, un angle vertical et des largeurs angulaires associées, ou suivant des coordonnées tridimensionnelles.

8. Procédé selon l'une des revendications précédentes, dans lequel l'un des au moins deux engins volants (AC1, AC2) attribue la sous-zone de recherche (TS1, TS2) à rechercher audit au moins un autre engin volant (AC1, AC2).

9. Procédé selon l'une des revendications précédentes, dans lequel les au moins deux engins volants (AC1, AC2) définissent indépendamment les uns des autres respectivement la sous-zone de recherche (TS1, TS2) à rechercher à l'aide du radar (R) de l'engin volant (AC1, AC2).

10. Engin volant (AC1, AC2) pour une formation d'engins volants selon la revendication 11, comprenant au moins un radar (R) et une unité de traitement, l'unité de traitement étant configurée pour mettre en œuvre un procédé selon l'une des revendications 1 à 9.

11. Formation d'engins volants comprenant au moins deux engins volants (AC1, AC2) selon la revendication 10, la formation d'engins volants étant configurée pour détecter une zone de recherche (S) dans un espace aérien.
